**Europäisches Patentamt**

**European Patent Office**

**Office européen des brevets**

(11) Veröffentlichungsnummer: **0 237 719**
**A1**

## (12) EUROPÄISCHE PATENTANMELDUNG

(21) Anmeldenummer: **87100691.2**

(22) Anmeldetag: **20.01.87**

(51) Int. Cl.4: **D06B 9/06** , D06F 43/08 ,
B01D 53/02 , B01D 5/00

(30) Priorität: **21.03.86 DE 3609587**

(43) Veröffentlichungstag der Anmeldung:
**23.09.87 Patentblatt 87/39**

(84) Benannte Vertragsstaaten:
**FR GB IT**

(71) Anmelder: **Böwe Reinigungstechnik GmbH**
**Haunstetterstrasse 112**
**D-8900 Augsburg(DE)**

(72) Erfinder: **Führing, Heinrich**
**Waldfriedenstrasse 7 1/2**
**D-8900 Augsburg(DE)**
Erfinder: **Sieber, Helmut**
**Birkenallee 31**
**D-8901 Aystetten(DE)**

(54) **Vorrichtung zur Rückgewinnung von Lösemittelgasen.**

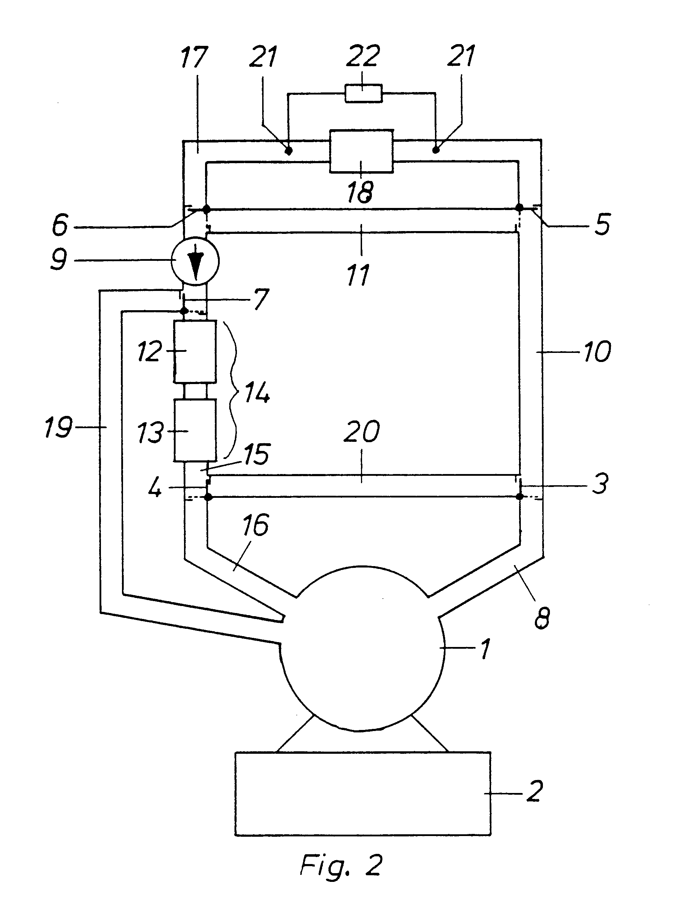

(57) Die Erfindung betrifft eine Vorrichtung zur Rückgewinnung von Lösemittelgasen bei der Trocknung von Ware mit Hilfe eines Luftstroms, der durch einen Ventilator im Kreislauf über einen Behandlungsbehälter, einen Luftkühler und einen Lufterhitzer geführt wird. Mit Hilfe einer Umgehungsleitung und geeigneten Schaltmitteln kann ein Adsorber in den Kreislauf eingeschaltet werden. Um die Adsorption zu verbessern und mit weniger Adsorptionsmittelmengen auszukommen, sieht die Erfindung vor, daß der Adsorber in Umlaufrichtung des Luftstroms gesehen nach dem Ausgang des Behandlungsbehälters in den Kreislauf einschaltbar ist. Zusätzlich kann ein den Kühler und den Erhitzer umgehender Leitungsabschnitt vorgesehen sein, so daß der Kreislauf lediglich über den Behandlungsbehälter und den Adsorber verläuft (Fig. 2).

Fig. 2

## Vorrichtung zur Rückgewinnung von Lösemittelgasen

Die Erfindung betrifft eine Vorrichtung zur Rückgewinnung von Lösemittelgasen bei der Trocknung von Ware mit Hilfe eines Luftstroms, bei welcher ein geschlossener, über einen die Ware aufnehmenden Behandlungsbehälter und über eine aus einem Luftkühler und einem Lufterhitzer bestehende Wärmetauschereinheit führender Leitungskreislauf vorgesehen ist, der einen Ventilator zur Umwälzung des Luftstroms aufweist, wobei ferner Schaltmittel, z. B. in Form von Ventilen oder dergleichen, und mindestens ein Leitungsabschnitt vorgesehen sind, durch die wahlweise ein Lösemitteladsorber mit dem Behandlungsbehälter in Serie in den Leitungskreislauf einschaltbar ist.

Mit einer derartigen Einrichtung, die in der Chemischreinigungstechnik bspw. durch die DE-PS 2214153 bekannt ist, erfolgt die Trocknung der Ware unter Rückgewinnung des in dem Luftstrom befindlichen, gasförmigen Lösemittels zunächst in einer ersten Phase durch Kondensation des Lösemittels und anschließende Erwärmung des erneut über die Ware geführten Luftstroms. Eine Rückgewinnung durch Adsorption anstelle einer Kondensation hat sich in dieser ersten Phase als nicht durchführbar erwiesen, da die Gaskonzentration bei Beginn der Trocknung für eine Adsorption viel zu hoch ist. Deshalb wird bei der vorbekannten Anordnung während der Trocknung durch Kondensation der Adsorber, der in den meisten Fällen Aktivkohle als Adsorptionsmittel enthält, durch den Bypass kurzgeschlossen. Erst gegen Ende der Trocknung, wenn die Gaskonzentration auf einen geringen Wert abgesunken ist, wird er, wie dort beschrieben, in den Kreislauf eingeschaltet.

Bei dieser vorbekannten Schaltung liegt der Adsorber jedoch dann vor dem Eingang des Behandlungsbehälters und nach dem Ausgang des Erhitzers. Er wird daher von der durch den Luftstrom aus dem Erhitzer mittransportierten Wärme beaufschlagt. Dadurch wird seine Adsorptionsfähigkeit sehr stark vermindert, selbst wenn der Erhitzer abgeschaltet wird, da in diesem dann noch sehr viel Wärme gespeichert ist.

Aus diesem Grund waren bisher für eine ausreichende Adsorption in der Lösemittelreinigungstechnik entsprechend große Kohlemengen als Adsorptionsmittel erforderlich. Derartige Adsorber konnten daher wegen ihrer Größe nicht im Maschinengehäuse selbst untergebracht sondern mußten außerhalb desselben aufgestellt werden. Derartig große Adsorber erforderten wiederum entsprechend großen apparativen und zeitlichen Aufwand für die Desorption, sei es nun mit Dampf oder Heißgas. Aufgrund der unterschiedlichen Taktzeiten von Desorptionszyklus und chargenzeitbedingten Reinigungs-und Trockenzeiten war es stets erforderlich, Doppeladsorber mit eigenständigen Wärmeaustauschsystemen und relativ großen Kohlekapazitäten einzusetzen.

Der Erfindung liegt daher die Aufgabe zugrunde, ein Lösungsmittelreinigungsmaschine zu -schaffen, bei der eine wirksame, abluftfreie Adsorption der Restgase am Ende der Trocknung durch eine solche Anordnung des Adsorbers in dem Kreislauf erreicht wird, die kleinere Abmessungen desselben und damit dessen Unterbringung im Maschinengehäuse ermöglicht.

Die Lösung dieser Aufgabe wird erfindungsgemäß dadurch erreicht, daß der Adsorber in Umlaufrichtung des Luftstroms gesehen unmittelbar oder über den Ventilator mit dem Ausgang des Behandlungsbehälters verbindbar ist. Er liegt also in Umlaufrichtung des dann gebildeten Kreislaufs nach dem Behandlungsbehälterausgang. Durch diese erfindungsgemäße Anordnung des Adsorbers wird die nachteilige Erwärmung des Adsorbers durch den Luftstrom vermieden, da dieser beim Durchtritt durch den Behandlungsbehälter seine Wärme an das Trocknungsgut abgibt und abgekühlt wird. Der Adsorber kann somit für die Aufnahme der gleichen Lösemittelgasmenge entsprechend kleiner dimensioniert werden.

Eine merkliche Weiterbildung der Erfindung kann noch dadurch erreicht werden, daß mindestens ein die Wärmetauschereinheit umgehender Leitungsabschnitt sowie Schaltmittel vorgesehen sind, durch die ein lediglich über den Adsorber, den Behandlungsbehälter und den Ventilator verlaufender Leitungskreislauf unter Ausschluß der Wärmetauschereinheit herstellbar ist. Hierdurch wird mit Sicherheit jede unerwünschte Erwärmung des Luftstroms und jede störende Beeinträchtigung durch die Wärmetauschereinheit bei der Adsorption vermieden. Man hat dann einen reinen Kreislauf lediglich zwischen Behandlungsbehälter und Adsorber, der, da er auf niedrigen Temparaturen gehalten werden kann, in vollem Maße wirksam ist. Man benötigt deshalb wesentlich weniger Adsorptionsmittelmengen als bisher. Die Größe des Adsorbers kann weiter verringert werden. Man kommt mit einem innerhalb der Dauer einer Reinigungscharge jedes Mal wieder frisch regenerierbaren Einbett-Adsorber aus.

Eine Weiterverbesserung der erfindungsgemäßen Anordnung wird schließlich auch noch dadurch erreicht, daß mindestens ein Leitungsabschnitt sowie Schaltmittel vorgesehen sind, durch die ein den Behandlungsbehälter umgehender, also nur über den Adsorber und die Wärmetauschereinheit verlaufender Leitungskreislauf herstellbar ist. Dies kann bspw. erreicht werden durch einen den Behälter umgehenden Bypass, der durch Ventile parallel zum Behälter geschaltet werden kann, während dessen Ein-und Ausgang abgesperrt sind. Hierdurch wird, in Kombination mit den vorausgegangenen Maßnahmen, eine Desorption des Adsorbers innerhalb der Dauer einer Reinigungscharge unter Benutzung der Wärmetauschereinheit erreicht, da gegenüber früher eine geringere Adsorptionsmittelmenge zur regenerieren ist.

Eine Umgehung des Behandlungsbehälters durch eine Bypass-Leitung ist bereits durch die SE-PS 110711 bekannt. Durch die dort vorgesehene Anordnung des Adsorbers im Kreislauf zwischen Kühler und Erhitzer ist jedoch eine Überladung des Adsorbers, falls er nicht entsprechend groß dimensioniert wird, unvermeidlich.

Um auch bei kleinen Adsorptionsmittelmengen eine bestmögliche Ausnutzung des Adsorbers zu erreichen, empfiehlt es sich im Rahmen der Erfindung, sowohl am Eingang als auch am Ausgang des Adsorbers je eine Einrichtung zur Messung der Lösemittelgaskonzentration in dem Luftstrom sowie eine Einrichtung zur Erzeugung eines Steuersignals bei ungefährer Gleichheit der Meßergebnisse vorzusehen. Bisher wurde der Adsorber so bemessen, daß bei jedem Durchgang der dem Behandlungsbehälterluftvolumen entsprechenden Luftmenge der vorgeschriebene Emissionsgrenzwert am Adsorberausgang nicht überschritten wurde. Man benötigte hierzu erhebliche Adsorptionsmittelmengen und mußte mit Wechselanlagen arbeiten, schon wegen der langen Desorptionszeit. Bei der erfindungsgemäßen Anordnung besteht hingegen die Möglichkeit, den Luftkreislauf nur solange aufrecht zu erhalten, bis die Eintrittskonzentration am Adsorber gleich der Austrittskonzentration ist, die einem gewünschtem Wert entspricht. Die Adsorptionsmittelmenge wird hierbei mitbestimmt durch das zu entsorgende Luftvolumen in der Apparatur, im wesentlichen also durch das Volumen des Behandlungsbehälters.

Die Erfindung überwindet die Nachteile des Standes der Technik und löst die Aufgabe, ein abluftfreies Reinigungssystem zu schaffen durch die organische Eingliederung eines heißluftdesorbierbaren, platzsparenden Einchargen/Einbett-Adsorbers in das konventionelle Kondensationstrockensystem einer Reinigungsmaschine durch die Zuordnung interner, regelbarer Leitungselemente, die ohne zusätzliche Wärmetauscher für den Adsorber die unabhängige Nutzung verschiedener Funktionskreisläufe ermöglichen.

Die Erfindung ist im folgenden am Beispiel einer Chemischreinigungsmaschine schematisch dargestellt. Sie ist jedoch nicht nur zur Behandlung von Textilien geeignet, sondern grundsätzlich auch anwendbar bei der Behandlung anderer Gegenstände wie Metalle, Felle oder Elektronikbauteile mit einem organischen Lösemittel, das nach der Behandlung von den Teilen bzw. Gegenständen entfernt und zurückgewonnen werden muß. Es zeigen:

Figur 1: Eine Chemischreinigungsmaschine mit einem erfindungsgemäßen Leitungssystem,

Figur 2: eine Variante zu Figur 1 und

Figur 3: eine Variante mit einem abgewandelten Leitungssystem.

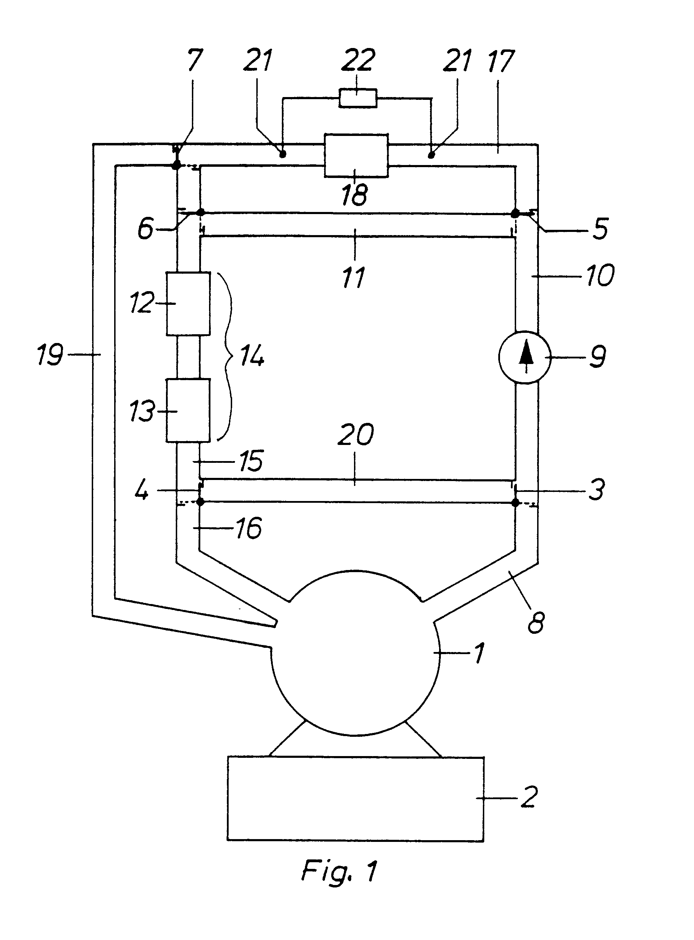

In Figur 1 ist als Behandlungsbehälter das Trommelgehäuse 1 einer Chemischreinigungsmaschine vorgesehen, das auf einem Teil des Maschinengestells 2 angeordnet ist, das zugleich als Vorratstank für Lösemittel ausgebildet ist. Das Trommelgehäuse 1 ist an ein Leitungssystem angeschlossen, das eine Anzahl von Ventilen in Form von Schalt-oder Absperrklappen 3, 4, 5, 6 und 7 aufweist. Je nach der Schaltstellung dieser Klappen können verschiedene Leitungskreisläufe in dem Leitungssystem hergestellt werden. Schalt- und Steuereinrichtungen zur Betätigung solcher Absperrklappen sind an sich bekannt und daher nicht näher dargestellt.

Bei der dargestellten Anordnung beginnt nach dem üblichen Wasch-und Schleudervorgang die Trocknung der noch in der Trommel des Trommelgehäuses 1 befindlichen Ware, bei der gleichzeitig auch das in der Ware und in dem Trommelgehäuse befindliche Lösemittel zurückgewonnen wird. Hierzu wird bei der in der Zeichnung dargestellten Ventil-bzw. Klappenstellung über einen Leitungsabschnitt 8 vom Ausgang des Trommelgehäuses 1 durch einen Ventilator 9, der in einem anschließendem Leitungsabschnitt 10 liegt, gemäß der angegebenen Pfeilrichtung Luft angesaugt und über einen Leitungsabschnitt 11 dem Eingang einer aus einem Kondensator 12 und einem Lufterhitzer 13 bestehenden Wärmetauschereinheit 14 zugeführt, die in einem Leitungsabschnitt 15 liegt. Nach Verlassen der Wärmetauschereinheit 14 strömt die Luft über einen Leitungsabschnitt 16 zurück zum Trommelgehäuse 1.

Weiterhin ist, parallel zu dem Leitungsabschnitt 11, ein weiterer Leitungsabschnitt 17 vorgesehen, der über einen Adsorber 18 führt, der jedoch bei der gezeichneten Stellung der Klappen 5, 6 und 7 von dem übrigen Leitungssystem abgetrennt und abgesperrt ist. Parallel zu dem Leitungsabschnitt 15 mit der Wärmetauschereinheit 14 ist ein einen Bypass bildender Leitungsabschnitt 19 vorgesehen, der die Wärmetauschereinheit 14 umgeht und direkt zum Eingang des Trommelgehäuses 1 führt, während er am anderen Ende durch die Klappe 7 absperrbar ist.

Nach Beendigung der an sich bekannten Kondensationstrocknung werden durch eine nicht dargestellte Steuereinrichtung die Klappen 5, 7 und 4 in die durch gestrichelte Linien angegebene Stellung bewegt. Hierdurch wird der von dem weiterlaufenden Ventilator 9 erzeugte Luftstrom in einem Kreislauf über das Trommelgehäuse 1 und den Adsorber 18 geführt. Die nach der Kondensationstrocknung noch verbliebene Restgasmenge wird dadurch rasch aus dem Trommelgehäuse abgeführt und im Adsorber 18 adsorbiert. Erhitzer 13 und Kühler 12 der Wärmetauschereinheit 14 können in dieser Zeit abgeschaltet werden. Unmittelbar danach werden sie jedoch erneut in Betrieb genommen, um den Adsorber zu regenerieren bzw. zu desorbieren.

Hierzu ist noch ein weiterer, das Trommelgehäuse 1 zwischen den Leitungsabschnitten 8 und 16 umgehender und einen Bypass zum Trommelgehäuse bildender Leitungsabschnitt 20 vorgesehen, der während der Trocknung durch die Klappen 3 und 4 abgesperrt ist. Um den Adsorber zu regenerieren werden die Absperrklappen 3, 4, 5 und 6 in die gestrichelt gezeichnete Stellung gebracht, während die Klappe 7 in ihre Ausgangsstellung zum Absperren der Leitung 19 zurückbewegt wird. Hierdurch entsteht ein durch den weiterlaufenden Ventilator angetriebener, zirkulierender Luftstrom, der im Erhitzer 13 erwärmt wird und dann mit entsprechend hoher Temperatur in den Adsorber 18 eintritt und das dort festgehaltene Lösemitel wieder desorbiert, dann dem Kondensator 12 zuführt, wo es niedergeschlagen wird, und hierauf erneut im Erhitzer 12 erwärmt wird. Nach wenigen Umläufen ist der Adsorber dann wieder betriebsbereit. Während dieses regenerierungs-bzw. Desorptionskreislaufes kann bereits die Ware aus dem Trommelgehäuse 1 entnommen und ein neuer Wasch-bzw. Reinigungszyklus begonnen werden. Am Ein-und Ausgang des Adsorbers 18 ist jeweils ein Meßfühler 21 zur Messung der Lösemittelgaskonzentration vorgesehen. Deren Meßergebnisse werden in einer Vergleichschaltung 22 miteinander verglichen, die bei Übereinstimmung ein Signal zur Beendigung des Adsorptionsvorganges liefert.

Figur 2 zeigt eine Variante zu Figur 1 und unterscheidet sich von dieser dadurch, daß hier der Ventilator 9 in dem Kreislauf nach dem Adsorber 18 mit dem Leitungsabschnitt 11 und vor der Abzweigung des Leitungsabschnittes 19 zwischen den Absperrklappen 6 und 7 vorgesehen ist. Diese Anordnung hat gegenüber der der Figur 1 den Vorteil, daß der Adsorber 18 im Unterdruckbereich und der

Kühler 12 im Überdruckbereich des Ventilators 9 liegen, was sich günstig bei der Desorption auswirkt. Ansonsten ist die Arbeitsweise dieser Anordnung, insbesondere die Betätigungsabfolge der einzelnen Absperrklappen, dieselbe wie in Figur 1.

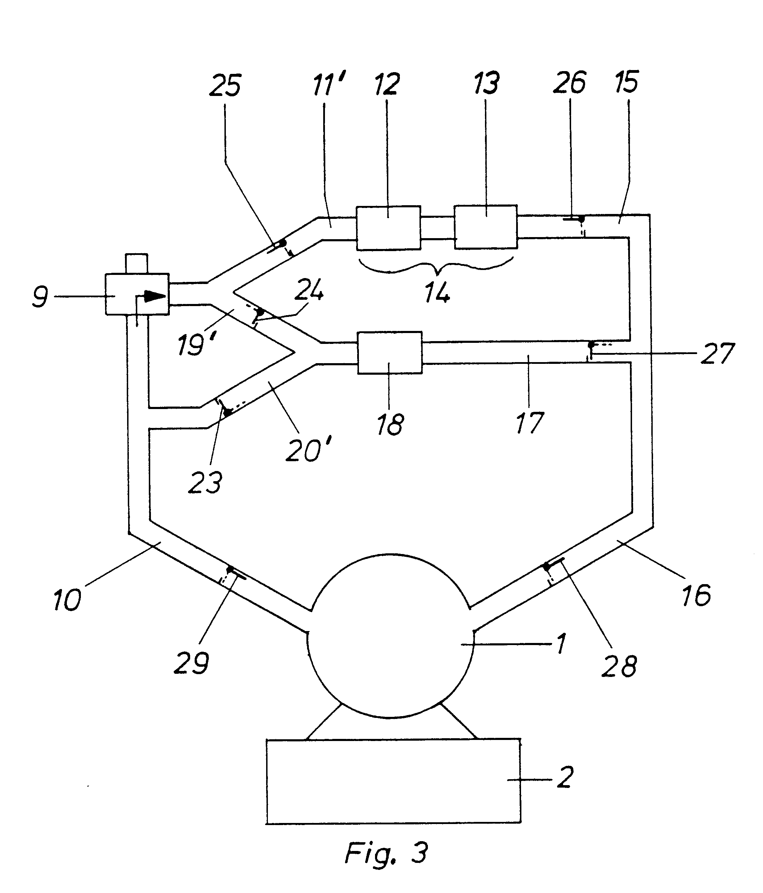

Die Anordnung gemäß Figur 3 weicht etwas von dem Leitungsschema in Figur 1 und 2 ab. Die oben beschriebenen Kreisläufe lassen sich hier in ähnlicher Weise herstellen mit Hilfe der je eine Absperrklappe 25, 24 und 23 aufweisenden Leitungsabschnitte 11', 19' und 20', die zwar nicht identisch sind mit den Leitungsabschnitten 11, 19 und 20 der Figuren 1 und 2, jedoch, wie leicht erkennbar, in ihrer Wirkung diesen gleichwertig sind.

So wird bei dieser Maschine gemäß Figur 3 ebenfalls nach dem Waschen und Schleudern zunächst der zwischen Trommelgehäuse 1 und Wärmetauschereinheit 14 verlaufende Trocknungskreislauf eingestellt durch Öffnen der Absperrklappen 25 und 26 sowie 28 und 29 und einschalten des Ventilators 9 der einen Luftstrom gemäß Pfeilrichtung im Kreislauf über die in der Trommel des Trommelgehäuses 1 befindliche Ware erzeugt. Alle anderen Absperrklappen 23, 24 und 27 sind dabei geschlossen. Nach Beendigung der Trocknung werden, während der Ventilator 9 weiterläuft, die Absperrklappen 24 und 27 sowie 28 und 29 geöffnet, alle anderen sind dann gesperrt. Während dieses Adsorptionskreislaufes werden die restlichen Lösemittelgase aus der Trocknung und aus dem Luftstrom entfernt.

Danach werden, während die Ware aus dem Trommelgehäuse 1 entnommen und ein neuer Reinigungsvorgang begonnen wird, bei weiterlaufendem Ventilator 9 die Absperrklappen 25 und 26 sowie 23 und 27 geöffnet und die Klappen 28 und 29 geschlossen. Die von dem Ventilator 9 angesaugte Luft wird durch die Wärmetauschereinheit 14 hindurchgedrückt, tritt mit hoher Temperatur aus dem Lufterhitzer 13 in den Adsorber 18 und nimmt das darin bei der vorausgegangenen Adsorption aufgenommene Lösemittel mit (Desorption), so daß es dann durch den Ventilator in den anschließenden Luftkühler 12 transportiert und dort niedergeschlagen wird.

Bei dieser Anordnung gemäß Figur 3 können in verschlechterter Ausführungsform die Absperrklappen 26 und 27 auch entfallen. Die Klappen 28 und 29 sind jedoch erforderlich, wenn während des Desorptionskreislaufes bereits wieder ein neuer Wasch-bzw. Reinigungszyklus begonnen wird.

**Ansprüche**

1. Vorrichtung zur Rückgewinnung von Lösemittelgasen bei der Trocknung von Ware mit Hilfe eines Luftstroms, bei welcher ein geschlossener, über einen die Ware aufnehmenden Behandlungsbehälter und über eine aus einem Luftkühler und einem Lufterhitzer bestehende Wärmetauschereinheit führender Leitungskreislauf vorgesehen ist, der einen Ventilator zur Umwälzung des Luftstroms aufweist, wobei ferner Schaltmittel und mindestens ein Leitungsabschnitt vorgesehen sind, durch die wahlweise ein Lösemitteladsorber mit dem Behandlungsbehälter in Serie in den Leitungskreislauf einschaltbar ist, **dadurch gekennzeichnet**, daß der Adsorber (18) in Umlaufrichtung des Luftstroms gesehen unmittelbar oder über den Ventilator mit dem Ausgang des Behandlungsbehälters (1) verbindbar ist.

2. Vorrichtung nach Anspruch 1, **dadurch gekennzeichnet**, daß mindestens ein die Wärmetauschereinheit (14) umgehender Leitungsabschnitt - (19, 19 ) sowie Schaltmittel (3, 5, 6, 7, 24, 27, 28, 29) vorgesehen sind, durch die ein lediglich über den Adsorber (18), den Behandlungsbehälter (1) und den Ventilator (9) verlaufender Leitungskreislauf unter Ausschluß der Wärmetauschereinheit - (14) herstellbar ist.

3. Vorrichtung nach Anspruch 1 oder 2, **dadurch gekennzeichnet**, daß mindestens ein Leitungsabschnitt (20, 20') sowie Schaltmittel (3, 5, 4, 6, 7; 25, 26, 23, 27, 28, 29) vorgesehen sind, durch die ein den Behandlungsbehälter (1) umgehender Leitungskreislauf herstellbar ist.

4. Vorrichtung nach Anspruch 1 oder einem der folgenden, **dadurch gekennzeichnet**, daß sowohl am Eingang als auch am Ausgang des Adsorbers (18) je eine Einrichtung zur Messung der Lösemittelgaskonzentration (21) in dem Luftstrom, sowie eine Einrichtung (22) zur Erzeugung eines Steuersignals bei ungefährer Gleichheit der Meßergebnisse vorgesehen sind.

*Fig. 1*

Fig. 2

*Fig. 3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 303 062 (FIRMA E. & E. PETERS GmbH) * Insgesamt * | 1,2 | D 06 B 9/06 D 06 F 43/08 B 01 D 53/02 B 01 D 5/00 |
| | --- | | |
| A | EP-A-0 130 546 (HOECHST AG) * Seite 3, Zeile 27 - Seite 6, Zeile 21; Figur 1 * | 2,3 | |
| | --- | | |
| A | GB-A-1 179 986 (BÖWE, BÖHLER & WEBER KG) | | |
| | ----- | | |

RECHERCHIERTE SACHGEBIETE (Int. Cl.4)

B 01 D 53/00
D 06 F 43/00
D 06 B 9/00
B 01 D 1/00
B 01 D 5/00

Der vorliegende Recherchenbericht wurde für alle Patentansprüche erstellt.

| Recherchenort | Abschlußdatum der Recherche | Prüfer |
|---|---|---|
| DEN HAAG | 08-06-1987 | POLESAK, H.F. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82